# EUROPEAN PATENT APPLICATION

(11) **EP 2 641 473 A1**
(43) Date of publication of application: **25.09.2013**
(21) Application number: 12001947.6
(22) Date of filing: 20.03.2012
(51) Int. Cl.: A23D 7/00, A23D 9/00, A21D 2/16, A23L 1/30

(54) **High oleic palm oil fractions**

(71) Applicant: Cargill Inc., Wayzata, MN 55391 (US)
(72) Inventor: Hollander, Frank, 4051 BL Ochten (NL)
(74) Representative: Dottridge, Cass A.C.

(57) **Abstract**

The invention relates to high oleic palm oil fractions having a MUFA to PUFA ratio of 4 or more and to their use, in particular, in food and/or beverage compositions.

## Description

### FIELD OF THE INVENTION

The present invention relates to high oleic palm oil fractions and to their various uses. In particular, it relates to the use of high oleic palm oil fractions with a relatively high ratio of monounsaturated fatty acids (MUFAs) to polyunsaturated fatty acids (PUFAs).

### BACKGROUND OF THE INVENTION

Palm oil is an edible oil derived from the fruit of the palm tree *Elaeis guineensis.* Palm oil is naturally red in colour due to the presence of high concentrations of beta-carotene and is one of a limited number of vegetable fats with a relatively high content in saturated fats.

Palm oil has been used for a long time as a common cooking ingredient in Africa, Southeast Asia and parts of Brazil. Because of its low cost, it has also been adopted, more recently, by the commercial food industry in other parts of the world.

Palm oil is made up of different triglycerides, just like any other oil or fat. A triglyceride is composed of three fatty acids linked by a glycerol backbone. These fatty acids may be saturated (no double bonds on the carbon chain), monounsaturated (a single double bond) or polyunsaturated (more than one double bond). Typically, the main fatty acid constituents of palm oil are palmitic acid (C16:0), stearic acid (C18:0), oleic acid (C18:1) and linoleic acid (C18:2). As a result, palm oil is semi-solid at room temperature. This makes it unsuitable for use in certain applications, especially food and beverage applications, which require an oil with a lower melting point (i.e. which is liquid at room temperature).

As such, palm oil is often modified before use. In particular, it is often fractionated to separate its solid (stearin) and liquid (olein) fractions. In some instances, the olein fraction may be further fractionated to obtain a highly fluid super-olein. Unfortunately, refined palm oil oleins and super oleins both suffer from low oxidative stability due to a relatively high ratio of polyunsaturated fatty acids (PUFAs) to monounsaturated fatty acids (MUFAs). Lipid peroxidation (to which PUFAs are particularly vulnerable) results in rancidity and significantly reduces an oil's shelf-life. In frying oils, oxidation is an even greater concern as it will lead to the formation, during use at elevated temperatures, of undesirable polar compounds.

One solution to this has been to replace antioxidants lost during refining. Indeed, although crude palm oil products have relatively high levels of natural antioxidants, the normal refining process unfortunately results in a very large part of them being lost. These lost antioxidants can be replaced, after refining, with other antioxidants (such as butylated hydroxyanisole - BHA, butylated hydroxytoluene - BHT, tert-butylhydroquinone - TBHQ, tocopherol extracts, rosemary extracts, tea extracts, ascorbylpalmitate or lecithin). These replacement antioxidants, however, need to be labeled as additives on food packaging, and are thus becoming an increasingly unpopular option for food producers.

As such, there is still a need in the art to identify a palm oil which would have a sufficiently low melting point, i.e. which would be sufficiently liquid at room temperature, whilst still having acceptable oxidative stability - without the need for antioxidant additives.

### STATEMENTS OF THE INVENTION

According to a first aspect of the present invention, there is provided a high oleic palm oil fraction, preferably an olein fraction, having a MUFA to PUFA ratio of 4 or more.

According to another aspect of the present invention, there is provided a composition comprising such a high oleic palm oil and/or a derivative thereof. According to one particular aspect of the invention, the composition will be a frying oil.

According to a further aspect of the present invention, there is provided the use of a high oleic palm oil fraction having a MUFA to PUFA ratio of 4 or more, and/or a derivative thereof, to increase the oxidative stability and/or shelf life of a frying oil, and/or to reduce the formation of polar compounds during frying.

According to an additional aspect of the present invention, there is provided a method of producing a high oleic palm oil fraction comprising the step of fractionating a high oleic palm oil, and/or a derivative thereof, having a MUFA to PUFA ratio of 4 or more, and recovering separate olein and stearin fractions.

### DETAILED DESCRIPTION

The present invention relates to high oleic palm oil fractions. A "high oleic palm oil" is a palm oil which naturally (i.e. even without fractionation or modification) has a relatively high content of oleic acid compared to a regular palm oil (a particular example of such an oil would be the high oleic oil obtained from hybrids of Elaies guineensis and Elaies olifeira). Oleic acid is by far the main monounsaturated fatty acid (MUFA) in palm oil. As such, oleic acid content can also be expressed as MUFA content. Regular palm oil typically has a MUFA content of 36-39% by weight. Even olein fractions of regular palm oil will only have a MUFA content of 40-44% by weight. By contrast, the high oleic palm oils used to produce the fractions of the present will preferably have a MUFA content of at least 45% by weight.

Palm oil fractions may include, for instance, stearin fractions, olein fractions (both obtained from a single fractionation) and super-stearins, super-oleins and mid-fractions (obtained after two or more fractionations). Preferably, the high oleic palm oil fractions of the present invention will be olein fractions.

The oil fractions of the present invention will have a weight ratio of MUFAs to PUFAs (polyunsaturated fatty acids) of at least 4, preferably of at least 4.5. According to one embodiment, they will have a weight ratio of MUFAs to PUFAs of 4-6, preferably of 4-5. Stearin fractions will preferably have a MUFA to PUFA ratio of 5 or more. The olein fractions will preferably have a MUFA content of 45% by weight or more, more preferably of 50% by weight or more. Advantageously, they will have a MUFA content of 55% or more by weight. According to one embodiment, they will have a MUFA content of 45-70%, preferably of 55-65% by weight.

Advantageously, the olein fractions of the present invention will remain fluid at room temperature. In other words, they will have a low solid fat content (SFC) at 20°C. In fact, even at 10°C, they will preferably have a SFC of less than 2% by weight. According to one embodiment, the SFC at 10°C will be less than 1%, more preferably less than 0.5% by weight. In fact, when analyzed, the olein fractions of the present invention were advantageously found to have a SFC at 10°C of 0 or close to 0. These olein fractions will preferably also be characterized by a cloud point below 5°C, more preferably below 2°C, more preferably below -2°C. Cloud point is measured according to AOCS method Cc 6-25.

A further advantage of the oil fractions of the present invention is their reduced saturated fatty acid (SAFA) content. Preferably, they will have a SAFA content of 45% by weight or less. According to certain embodiments, their SAFA content will be 40% or less, preferably 35% or less by weight. For instance, the SAFA content, especially of the olein fraction, may be 30% or less or even 25% or less. Expressed alternatively, the SAFA content of the olein fractions may be 15-45% by weight, preferably 20-30% by weight.

A further advantage of the high oleic palm oil fractions used according to the present invention is that, in their crude (i.e. unrefined) form, they have a low free fatty acid content. This, in turn, means that, when refined, they will have a low diglyceride content. Preferably, the refined high oleic palm oil fractions of the present invention will have a diglyceride content of less than 5% by weight.

Advantageously, a low diglyceride content (together with careful processing) will lead to the oils of the present invention having relatively low levels of 3-monochloropropane-1,2-diol fatty acid esters (3-MCPD esters) and glycidyl esters. Both 3-MCPD esters and glycidyl esters are associated with a possible carcinogenic effect and their intake should therefore be limited. Refined high oleic palm oil fractions of the present invention will preferably have a combined 3-MCPD ester + glycidyl ester content of 2 ppm or less, preferably of 1.5 ppm or less, more preferably of 1 ppm or less. If desired, known techniques to reduce 3-MCPD ester and glycidyl ester levels can be applied to reduce their content further.

The high oleic palm oil fractions used of the present invention will also preferably have a relatively high micronutrient content compared to regular palm oil. The term "micronutrient" as used herein refers to any compound (a) which may have some nutritive or beneficial effect for the consumer or for the stability of the oil composition itself, even when used only in very small quantities, and (b) which is naturally present, even if only in trace amounts, in crude oils (i.e. in non-refined oils). Examples of micronutrients include, but are not limited to, tocopherols and tocotrienols, sterols, sterol-esters, (poly)phenols, squalenes, certain phospholipids, specific triglycerides and diglycerides. The high oleic palm oil fractions of the present invention will preferably have a relatively high tocopherol and tocotrienol content compared to corresponding regular palm oil fractions.

Tocopherols and tocotrienols are fat-soluble antioxidants associated with a number of health benefits (neurological development, fertility, etc.) thanks to their Vitamin E activity. They both feature a chromanol ring (with a hydroxyl group that can donate a hydrogen atom to reduce free radicals and a hydrophobic side chain which allows for penetration into biological membranes) and both occur in alpha, beta, gamma and delta forms (determined by the number of methyl groups on their chromanol ring). Tocotrienols differ from their analogous tocopherols by the presence of three double bonds in their hydrophobic side chain. Although the various tocopherols and tocotrienols each have a slightly different biological activity, for ease of reference herein, they will all be referred to under the heading of TOCOLs. Ideally, the refined high oleic palm oil fractions of the present invention will have a TOCOL content about 30-40% higher (by weight) than a corresponding regular refined palm oil fration. According to a possible embodiment, it will have a TOCOL content of between 600 and 1500 ppm, preferably of between 800 and 1200 ppm.

As mentioned above, regular palm oil typically has a distinctive red color due to the presence of high levels of carotenoid. By contrast, the high oleic palm oil fractions of the present invention will preferably have a low carotenoid content. Ideally, the refined oil fractions will have a carotenoid content of less than 1 ppm.

The high oleic palm oil fractions used in accordance with the present invention will preferably be refined, that is: the fractions may be produced from a fully refined high oleic palm oil, or they may be refined after fractionation. Alternatively, the fractions may be produced from a partially refined oil and then further refined after fractionation. Refining may be performed according to standard practice in the art, using any known methods or techniques to produce an oil fraction suitable for human consumption. For example, the fraction may be degummed, bleached and deodorized. The fractions may be used as such or they may be modified to produce high oleic palm oil fraction derivatives.

Derivatives include, for example, oils which have been physically, chemically and/or enzymatically modified. By way of illustration only, the fractions may be interesterified. Modification may be performed before or after fractionation, or both. Fractionation may be performed using any method known in the art, e.g. dry fractionation or solvent fractionation. In fact, a method of producing high oleic palm oil fractions is also part of the present invention. Preferably, the method will include the step of fractionating a high oleic palm oil, and/or a derivative thereof, having a MUFA to PUFA ratio of 4 or more. After fractionation, separate olein and stearin fractions can be recovered. If desired, a further fractionation may then be performed to obtain e.g. a super-olein fraction (from the olein fraction) or a super-stearin fraction (from the stearin fraction). However, one of the benefits of the present invention is that, with a single fractionation, an oil with properties similar to those of a regular palm oil super-olein can be obtained. For example, after a single fractionation, an oil with a MUFA content of 45% or more, or with a very low SFC content even at 10°C (as described above) could be obtained. This could result in significant cost savings.

The fractions of the present invention can be used in any known application to replace, in whole or in part, any one or more existing oil or fat ingredients, e.g. in food or beverage applications, in feed compositions, in cosmetics or in technical or industrial applications. Thus, the present invention also provides compositions comprising the high oleic palm oil fractions described above and their use, optionally together with one or more additional ingredients.

For example, the present invention provides a food and/or beverage composition comprising the high oleic palm oil fractions described above. These could include, by way of illustration only, bakery products (e.g. cakes, breads, doughs, pastries, batters, etc.), culinary products (e.g. bouillons), frozen products (e.g. pizzas, fries, etc.), dairy products (e.g. cheese products, yogurts, ice-creams, etc.), confectionery products (e.g. chocolates, fillings, coatings, etc.), fat-based products per se (such as margarines, spreads or frying oils), infant formulas or infant nutrition products, nutritional supplements and so on. It is believed that refined high oleic palm oil fractions of the present invention will be particularly suitable for use in infant formulas, infant nutrition products, margarines, spreads, and frying oils. Refined stearin fractions of the invention are believed to be particularly suitable for use in margarines, spreads and bakery applications. Thus, the present invention specifically provides infant formulas, infant nutrition products, bakery products, margarines, spreads, and frying oils comprising a high oleic palm oil fraction (and/or a derivative thereof) as defined above.

As already mentioned, the oil fractions of the present invention may be used in combination with one or more additional ingredients. These could include, for instance, additional micronutrients, antioxidants or other oils. When used in combination with one or more other oils, these oils will preferably be selected from other high oleic oils such as high oleic sunflower oil, olein fractions such as palm oil olein or palm oil super-olein and mixtures of two or more thereof. According to one particular embodiment of the present invention, there is provided a frying oil comprising (or even consisting of) the high oleic palm oil fractions (and/or their derivatives) as described above. As would be apparent to a person skilled in the art, the frying oil may further comprise one or more other oils to achieve a desired color, taste or viscosity, for instance. For example, a high oleic palm oil olein of the invention may be blended with an oil selected from the group consisting of: an olein fraction of another oil, a high oleic oil, a high oleic oil fraction, and mixtures of two or more thereof.

It has been found that the oil fractions of the present invention (both oleins and stearins) have improved oxidative stability compared to regular palm oil olein. As such, they may be used to increase the oxidative stability and/or the shelf life of a composition (e.g. a food and/or beverage composition) to which they are added. In particular, the present invention provides the use of a refined high oleic palm oil fraction, as described above, to increase the oxidative stability of a frying oil.

A frying oil will be understood to be any oil suitable for use in frying food products for human consumption. It will typically be pourable, and preferably substantially liquid at room temperature (that is to say that it will preferably have an overall SFC at 20°C of less than 5% by weight). It may also be referred to as a "cooking oil". Oxidation in frying oils is a particular concern as degradation will occur much more rapidly when exposing an oil to high temperatures in the presence of moisture and air. In particular, if an oil does not have good oxidative stability, there will be a high risk of polar compounds being formed. These are associated with unpleasant taste and residue formation. Because of their relatively high (compared to regular palm oil oleins) content in unsaturated fatty acids, the high oleic palm oil fractions of the present invention were expected to have less oxidative stability, especially when used for frying. Surprisingly, however, they have been found to have very good oxidative stability and to lead to a reduction in the amount of polar compounds formed when used at high temperatures (e.g. for frying). Thus, the present invention also provides the use of a high oleic palm oil fraction to reduce the formation of polar compounds in frying oils.

The stearin fractions of the present invention will preferably be used, for example, in the production of margarines, margarine hardstock and/or spreads. According to one particular embodiment, the high oleic palm oil will be fractionated (preferably via a single fractionation) and then the stearin fraction will be recovered. The recovered stearin fraction may then be interesterified before use. It is believed that the stearin fractions and their derivatives (e.g. interesterified stearin fractions) will have improved oxidative stability and will therefore contribute to a better (longer) shelf life for the products in which they are used (such as margarines and spreads).

The high oleic palm oil fractions of the present invention, and/or any derivatives thereof, may also be used in non-food or beverage applications such as in animal feed, cosmetics or for technical or industrial applications. For these non-food or beverage applications, the high oleic palm oil fractions may not need to be refined or, at least, may not need to be fully refined and can thus be used in their crude or partially refined forms. They may be used alone or in admixture with one or more other oils, additives and/or components.

Further permutations and embodiments of the present invention will be apparent to a person skilled in the art and are incorporated herein without further description. Certain embodiments are described in further detail in the following, non-limiting, examples.

### EXAMPLES

### Example 1: Oil Comparison (standard palm oil vs. high oleic palm oil and their fractions)

| | RPO* | RPO* Olein | HOPO** | HOPO** Olein | HOPO** Stearin |
|---|---|---|---|---|---|
| C12 | 0,2 | 0,2 | 0,1 | 0,13 | 0,13 |
| C14 | 1,0 | 0,9 | 0,4 | 0,32 | 0,35 |
| C16 | 43, 5 | 40,8 | 29,7 | 21,33 | 29,01 |
| C18 | 4,6 | 4 | 2,6 | 2,12 | 2,71 |
| C18:1 | 39,5 | 41,8 | 54,1 | 61,45 | 55,43 |
| C18:2 | 10.1 | 10,4 | 11,3 | 12,2 | 10,26 |
| C18:3 | 0,2 | 0,1 | 0,4 | 0,63 | 0,54 |
| Calc IV | 51 | 56 | 67,4 | 75,9 | 66,9 |
| SAFAs | 49.8% | 46% | 33.3% | 24,5 | 32,8 |
| MUFAs | 39.5% | 41.8% | 54.1% | 61,5 | 55,4 |
| PUFAs | 10.2% | 10.5% | 11.7% | 12,8 | 10,3 |
| MUFA:PUFA | 3.9 | 3.9 | 4.6 | 4,8 | 5,2 |
| SFC @ 10°C | 50 | 38,4 | 18,2 | 0 | 26,2 |
| SFC @ 20°C | 26,9 | 10,8 | 3,4 | 0 | 5,8 |
| SFC @ 25°C | 15,8 | 3,8 | 1,8 | 0 | 3,0 |
| SFC @ 30°C | 9 | 0,9 | 0,4 | 0 | 1,2 |
| SFC @ 35°C | 4,6 | 0 | 0,1 | 0 | 0,1 |
| SFC @ 40°C | 0,5 | 0 | 0 | 0 | 0 |
| 3-MCPD+glycidyl ester | NM | 5.0 ppm | 1.8 ppm | NM | NM |

| | | | | | |
|---|---|---|---|---|---|
| *Refined Standard Palm Oil (also known as RBD Palm); **Refined High Oleic Palm Oil from Columbia; NM = not measured | | | | | |

## Claims

1. A high oleic palm oil fraction having a MUFA to PUFA ratio of 4 or more, and/or a derivative thereof.

2. A high oleic palm oil fraction according to claim 1, **characterized in that** it is an olein fraction.

3. A high oleic palm oil fraction according to claim 2, **characterized in that** it has a MUFA content of 45% by weight or more.

4. A high oleic palm oil fraction according to claim 2 or claim 3, **characterized in that** it has a solid fat content (SFC) at 10°C of less than 2% by weight.

5. A high oleic palm oil fraction according to any one of claims 2 to 4, **characterized in that** it has a SAFA level of 45% by weight or less.

6. A high oleic palm oil fraction according to any one of the preceding claims, **characterized in that** it has a 3-mcpd ester + glycidyl ester content of 2 ppm or less, preferably of 1.5 ppm or less.

7. A high oleic palm oil fraction according to any one of the preceding claims, **characterized in that** it has: a high micronutrient/tocopherol content, and/or a low carotenoid content, and/or a diglyceride content, after refining, of less than 5% by weight.

8. A composition comprising the high oleic palm oil fraction of any one of claims 1 to 7 and/or a derivative thereof.

9. A composition according to claim 8, selected from: a food composition, a beverage composition, a feed composition, a cosmetic composition and a composition for industrial use.

10. A frying oil comprising the high oleic palm oil fraction according to any one of claims 1 to 7 and/or a derivative thereof.

11. The frying oil according to claim 10, having improved oxidative stability.

12. Use of a high oleic palm oil fraction according to any one of claims 1 to 7, and/or of a derivative thereof, to increase the oxidative stability and/or shelf life of a food, feed or beverage composition.

13. Use of a high oleic palm oil olein according to any one of claims 1 to 7, and/or of a derivative thereof, to increase the oxidative stability and/or shelf life of frying oil, and/or to reduce the formation of polar compounds during frying.

14. A method of producing a high oleic palm oil fraction comprising the steps of fractionating a high oleic palm oil, and/or a derivative thereof, having a MUFA to PUFA ratio of 4 or more, and recovering separate olein and stearin fractions.

15. A method of producing a palm oil fraction having a MUFA content of 45% by weight or more comprising subjecting a high oleic palm oil to a single fractionation step.
